Europäisches Patentamt

European Patent Office

Office européen des brevets

(19)

(11) Numéro de publication: **0 268 527 B1**

(12) **FASCICULE DE BREVET EUROPEEN**

(45) Date de publication de fascicule du brevet:
**12.02.92**

(51) Int. Cl.⁵: **C25B 9/00**, H01M 8/24

(21) Numéro de dépôt: **87402514.1**

(22) Date de dépôt: **06.11.87**

(54) **Procédé d'empilage étanche d'éléments plats et dispositif à éléments plats empilés selon ce procédé.**

(30) Priorité: **14.11.86 FR 8615862**

(43) Date de publication de la demande:
**25.05.88 Bulletin 88/21**

(45) Mention de la délivrance du brevet:
**12.02.92 Bulletin 92/07**

(84) Etats contractants désignés:
**AT BE CH DE FR GB IT LI LU NL SE**

(56) Documents cités:
**EP-A- 0 132 079**
**GB-A- 497 956**

(73) Titulaire: **SOCIETE DE RECHERCHES TECHNI-OUES ET INDUSTRIELLES (SRTI)**
**283, rue de la Minière**
**F-78530 - BUC(FR)**

(72) Inventeur: **Le Mitre, Guy**
**THOMSON-CSF SCPI 19, avenue de Messine**
**F-75008 Paris(FR)**
Inventeur: **Caby, Frédéric**
**THOMSON-CSF SCPI 19, avenue de Messine**
**F-75008 Paris(FR)**

(74) Mandataire: **Phan, Chi Ouy et al**
**THOMSON-CSF SCPI**
**F-92045 PARIS LA DEFENSE CEDEX 67(FR)**

EP 0 268 527 B1

## Description

La présente invention concerne un procédé d'empilage étanche d'éléments plats, et dispositif à éléments plats, tel qu'un électrolyseur, empilés selon ce procédé.

Quand des éléments plats tels que des cellules d'électrolyse dans un électrolyseur doivent être empilés et maintenus serrés les uns contre les autres pour obtenir une bonne étanchéïté entre leurs bords, une solution habituelle consiste à les assembler en pile et à les maintenir par des tirants dont le degré de serrage des écrous détermine le niveau d'intimité de contact entre les bords de ces éléments. Cependant sous l'effet d'une variation de températures, les divers composants de cette pile d'éléments se dilatent ou se contractent suivant des coefficients différents selon la nature de leur matériau constituant. L'intimité de contact ou l'étanchéïté des bords des éléments plats de cette pile risque d'être compromise ou disparue. Dans le document GB-A-497 956 est décrit un électrolyseur ayant un corps formé de plusieurs cellules sous forme d'éléments plats empilés, disposé entre deux plaques d'extrémité maintenues par des tirants, et serré contre l'une des deux plaques d'extrémité par des ressorts montés sur des guides télescopiques et insérés entre ce corps de cellules sous forme d'éléments plats et l'autre de ces plaques d'extrémité.

La présente invention, visant à éviter ces inconvénients, a pour objet un procédé perfectionné d'empilage étanche d'éléments plats disposés dans une enveloppe rigide.

L'invention a également pour objet un électrolyseur à cellules d'électrolyse empilées selon ce procédé.

Selon l'invention, un procédé d'empilage étanche d'éléments plats comprimés par des ressorts disposés dans une enveloppe rigide ayant un fond et un couvercle, est caractérisé en ce qu'il comprend des étapes suivantes :

- maintenir assemblés en pile et libres en coulissement axial les uns par rapport aux autres, les éléments plats par au moins deux tirants-guides ;
- monter sur cette pile d'éléments plats, des moyens associés de compression, constitués par une couronne terminale rigide disposée sur le dernier élément plat et coulissante sur ces tirants-guide, une couronne-support et des ressorts disposés régulièrement espacés entre cette couronne terminale et cette couronne-support et neutraliser temporairement ces ressorts en les comprimant au moyen de vis de neutralisation provisoire qui rapprochent ces deux couronnes ;
- former d'une part une rainure transversale dans la paroi latérale interne de l'enveloppe à une hauteur du fond, supérieure d'une valeur prédéterminée à la hauteur de la pile d'éléments plats et d'autre part des butées d'appui pour ces moyens associés de compression, constituées par des segments plats dont les bords extérieurs sont destinés à être implantés par insertion ajustée dans cette rainure transversale et les bords intérieurs en saillie dans l'enceinte de l'enveloppe servent de butées d'appui à ces moyens associés de compression ;
- disposer la pile d'éléments plats et les moyens associés de compression, dans l'enveloppe, contre le fond de celle-ci ;
- mettre en place les segments plats servant de butées d'appui, par insertion ajustée de leurs bords extérieurs dans la rainure transversale de l'enveloppe, et
- remettre en action les moyens associés de compression sur la pile des éléments plats en débloquant les ressorts hélicoïdaux par enlèvement de ces vis de neutralisation provisoire, et en laissant agir ces ressorts qui, par une de leurs extrémités appliquent la couronne-support contre les butées d'appui et leurs autres extrémités, compriment élastiquement et en permanence les éléments plats les uns contre les autres et contre le fond de l'enveloppe, et assurent ainsi l'étanchéité de leur empilage, indépendamment de l'état ouvert ou fermé du couvercle de l'enveloppe.

L'invention est applicable à tout appareil ou dispositif muni d'éléments plats empilés à bords en contact étanche.

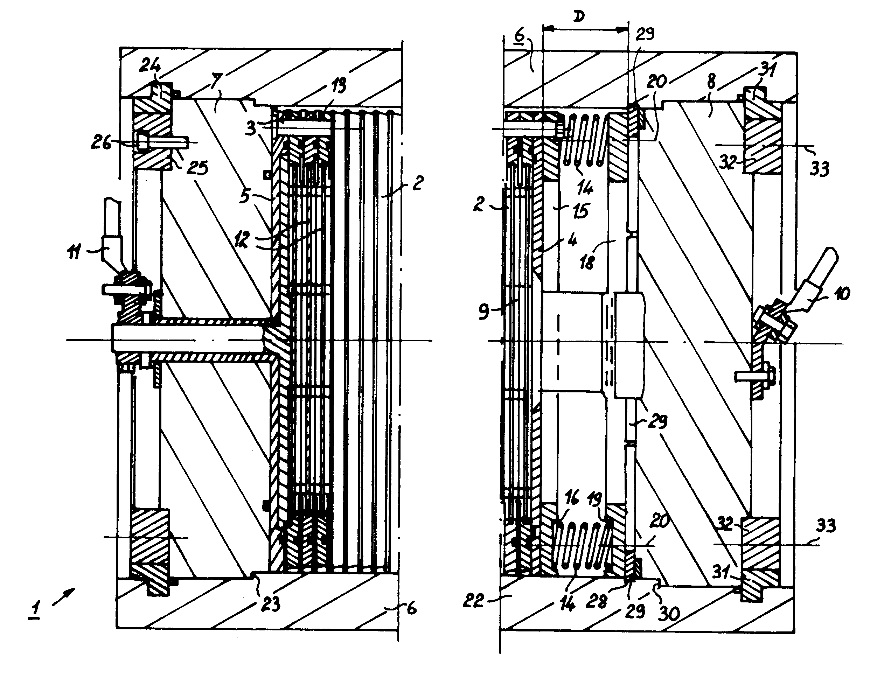

Pour mieux faire comprendre l'invention on en décrit ci-après un exemple de mise en oeuvre applicable à un électrolyseur illustré partiellement et schématiquement dans le dessin unique ci-annexé qui est une vue en coupe longitudinale partielle.

Un électrolyseur 1 illustré dans le dessin comme un exemple de mise en oeuvre du procédé ci-dessus comprend plusieurs cellules d'électrolyse 2 empilées, libres en coulissement axial sur des tirants-guides 3, entre deux plaques électriquement isolantes d'extrémité 4, 5 et électriquement mises en série, et une enveloppe rigide 6 fermée par un fond 7 et munie d'un couvercle 8. Deux cellules contiguës 2 sont séparées l'une de l'autre par une paroi métallique ou électrode plate 9 dont l'une de ses faces constitue une anode et la face opposée forme une cathode.

Aux deux extrémités de l'électrolyseur 1, les électrodes plates 9 constituent respectivement une cathode et une anode. La cathode est connectée à une borne négative 10 et l'anode est branchée à

EP 0 268 527 B1

une borne positive 11. Chacune des cellules d'électrolyse 2 est séparée en deux compartiments par un diaphragme 12 réalisé en amiante. Ces diaphragmes 12 sont bordés par des couronnes plates 13 en une matière plus ou moins élastique, résistante à la chaleur, à la pression et à la corrosion. Dans un mode préférentiel de réalisation, l'étanchéité entre couronnes, en périphérie comme autour des trous, est assurée par des joints comprimés dans leurs gorges par l'effet de serrage. Chacune des couronnes comprend des trous pour le passage des tirants-guides 3, des trous non représentés pour alimenter les cellules 2 en électrolyte et pour évacuer ou récupérer des gaz produits dans ces cellules. Dans l'empilement des cellules 2, les couronnes 13 des diaphragmes 12 sont disposées côte à côte et serrées les unes contre les autres pour obtenir une bonne étanchéité, et de manière que les électrodes plates 9 soient enserrées entre ces couronnes 13, que les trous réalisés dans les couronnes forment des voies continues distinctes et étanches pour la circulation de l'électrolyte alimentant les cellules 2, et pour la récupération ou l'évacuation des gaz tels que l'oxygène et l'hydrogène produits dans ces cellules 2. En outre l'électrolyseur 1 comprend comme moyens associés de compression, des ressorts hélicoïdaux 14, une couronne terminale rigide servant de couronne de répartition de charge 15, muni dans l'une de ses surfaces, de creux ou alvéoles espacées 16 de réception des premières extrémités des ressorts 14, maintenue sur la pile de cellules 2, à l'extérieur de la plaque électriquement isolante 4, et coulissante sur les tirants-guides 3, une couronne-support 18 munie dans l'une de ses surfaces, de creux ou alvéoles espacés 19 de réception des deuxièmes extrémités des ressorts 14, et des vis 20 appelées vis de neutralisation provisoire, représentées schématiquement dans le dessin par des traits discontinus, destinées à maintenir temporairement les ressorts 14 comprimés entre ces deux couronnes 15 et 18.

L'enveloppe rigide 6 comprend un corps tubulaire 22 pour recevoir une pile de cellules 2 et des moyens associés de compression, un fond démontable 7 bloqué entre un épaulement 23 du corps 22 et des cales 24 maintenues par des butées 25 et des vis 26, une rainure transversale continue 28 formée dans la paroi latérale interne de l'enveloppe 6 autrement dit du corps tubulaire 22, à une hauteur vis-à-vis du fond 7 supérieure d'une valeur prédéterminée à la hauteur de la pile de cellules 2, des butées d'appui pour ces moyens associés de compression, constitués par des segments plats 29 dont les bords extérieurs sont destinés à être implantés par insertion ajustée dans cette rainure 28 et les bords intérieurs font saillie dans l'enceinte de l'enveloppe 6 pour servir de butées d'appui, et un couvercle démontable 8 bloqué contre un épaulement 30 du corps 22 et des cales 31 maintenues par des butées 32 et vis 33 représentées par des traits discontinus. Dans la rainure transversale continue 28, les segments plats sont assemblés bout à bout et forment une rangée continue de butées d'appui sur le pourtour de la paroi interne de l'enveloppe rigide 6.

Dans un assemblage de l'électrolyseur 1, la pile de cellules 2 munie de ressorts 14 maintenus comprimés entre deux couronnes 15 et 18 est d'abord introduite dans l'enveloppe 6 et appliquée contre le fond 7, les segments plats 29 sont ensuite mis en place par insertion ajustée de leurs bords extérieurs dans le fond de la rainure transversale continue 28, et les vis 20 de neutralisation provisoire de ressorts 14 sont enfin enlevées pour que la couronne-support 18 sous l'action des ressorts 14 libérés, vienne s'appuyer contre les butées d'appui formées par les bords intérieurs des segments 29 en saillie à l'intérieur de l'enveloppe 6, que les ressorts 14 libérés exercent une pression sur la pile de cellules 2, serrent élastiquement les couronnes 13 les unes contre les autres et contre le fond 7 de l'enveloppe 6 et de ce fait assurent en permanence une bonne étanchéité d'assemblage de celles-ci malgré une différence de dilatation ou de contraction entre les tirants-guides 3 et ces couronnes 13 sous l'effet d'une variation de températures dans l'électrolyseur 1. Les ressorts 14 étant montés, indépendamment du couvercle 8, dans l'électrolyseur 1, le couvercle 8 peut alors être mis en place dans l'ouverture de l'enveloppe 6 pour la fermer sans avoir à effectuer sur ce couvercle 8 aucun effort d'enfoncement. Le couvercle 8 est bloqué en position par des cales 31 maintenues par des butées 32 et vis 33. Le maintien étanche des couronnes 13 assemblées en pile se fait ainsi par des ressorts 14 indépendamment de l'ouverture ou de la fermeture du couvercle 8 de l'enveloppe 6 de l'électrolyseur 1.

Dans l'exemple illustré, les segments plats 29 servant de butées d'appui qui occupent toute la longueur de la rainure transversale continue 28 sont constitués par quatre segments plats assemblés bout-à-bout.

Dans l'exemple illustré, le corps 22, le fond 7 et le couvercle 8 de l'enveloppe 6, les tirants-guides 3, la couronne terminale 15, la couronne-support 18, les ressorts 14, les segments plats 29 sont constitués en un matériau résistant à la chaleur, à la pression et à la corrosion de l'électrolyse utilisé

**Revendications**

1.  Procédé d'empilage étanche d'éléments plats comprimés par des ressorts disposés dans

3

une enveloppe rigide (6) ayant un fond (7) et un couvercle (8), caractérisé en ce qu'il comprend des étapes suivantes :

- maintenir assemblés en pile et libres en coulissement axial les uns par rapport aux autres, les éléments plats (9-12-13) par au moins deux tirants-guides (3) ;
- monter sur cette pile d'éléments plats, des moyens associés de compression, constitués par une couronne terminale rigide (15) disposée sur le dernier élément plat et coulissante sur ces tirants-guide (3), une couronne-support (18) et des ressorts (14) disposés régulièrement espacés entre cette couronne terminale (15) et cette couronne-support et neutraliser temporairement ces ressorts en les comprimant au moyen de vis de neutralisation provisoire (20) qui rapprochent ces deux couronnes (15,18) ;
- former d'une part une rainure transversale (28) dans la paroi latérale interne de l'enveloppe (6) à une hauteur du fond (7), supérieure d'une valeur prédéterminée à la hauteur de la pile d'éléments plats et d'autre part des butées d'appui pour ces moyens associés de compression, constituées par des segments plats (29) dont les bords extérieurs sont destinés à être implantés par insertion ajustée dans cette rainure transversale (28) et les bords intérieurs en saillie dans l'enceinte de l'enveloppe (6) servent de butées d'appui à ces moyens associés de compression (14-18) ;
- disposer la pile d'éléments plats et les moyens associés de compression, dans l'enveloppe (6), contre le fond (7) de celle-ci ;
- mettre en place les segments plats servant de butées d'appui (29), par insertion ajustée de leurs bords extérieurs dans la rainure transversale (28) de l'enveloppe (6), et
- remettre en action les moyens associés de compression (14-15) sur la pile des éléments plats en débloquant les ressorts hélicoïdaux (14) par enlèvement de ces vis de neutralisation provisoire, et en laissant agir ces ressorts qui, par une de leurs extrémités appliquent la couronne-support (18) contre les butées d'appui (29) et leurs autres extrémités, compriment élastiquement et en permanence les éléments plats les uns contre les autres et contre le fond (7) de l'enveloppe (6), et assurent ainsi l'étanchéité de leur empilage, indépendamment de l'état ouvert ou fermé du couvercle de l'enveloppe (6).

2. Dispositif à éléments plats tel qu'un électrolyseur, caractérisé en ce qu'il comprend une enveloppe rigide (6) fermée par un fond (7) et munie d'un couvercle (8), plusieurs cellules d'électrolyse (2) constituées par des électrodes plates (9) et des diaphragmes (12) bordés de couronnes plates (13), assemblés en alternance et en pile sur le fond (7) le long des tirants-guides (3), et des moyens associés de compression comportant une couronne terminale rigide (15) disposée sur une plaque isolante (4) contre cette pile de cellules d'électrolyse, et coulissante sur ces tirants-guides (3), une couronne support (18) espacée de cette dernière et bloquée par des butées d'appui constituées par des segments plats (29) montés dans une rainure transversale (28) de la paroi latérale interne de l'enveloppe (6), et des ressorts (14) disposés régulièrement espacés entre ces deux couronnes (15,18).

3. Dispositif selon la revendication 2, caractérisé en ce que dans l'enveloppe (6) la rainure transversale (28) pour le montage des butées d'appui pour les moyens associés de compression, est une rainure transversale continue (28) et les butées d'appui constituées par des segments plats (29) montés dans cette rainure transversale continue (28) forment une rangée continue de butées sur le pourtour de la paroi interne de l'enveloppe (6).

4. Dispositif selon la revendication 3, caractérisé en ce que dans les butées d'appui pour les moyens associés de compression, les segments plats (29) sont au nombre de quatre.

**Claims**

1. A method of sealingly stacking flat elements loaded by springs arranged in a rigid enclosure (6) having a bottom (7) and a cover (8), characterized in that it comprises the following steps:
   - maintaining the flat elements (9-12-13) assembled in a stack and free to slide axially in relation to each other by the intermediary of two guide ties (3);
   - assembling, on this stack of flat elements, associated loading means constituted by a terminal rigid crown (15) arranged on the last flat element and sliding on the guide ties (3), a support crown (18) and springs (14) arranged with a regular spacing between this terminal crown (15) and the said support crown (1), temporarily neutralizing these springs by loading them by means of temporary neutralizing screws (20) which move the two crowns (15 and 18) towards each other;

- forming a transverse groove (20) on one side in the lateral internal wall of the enclosure (6) at a vertical distance from the bottom (7) which is larger by a predetermined amount than the height of the stack of the flat elements and on the other side support abutments for these associated loading means, constituted by flat segments (29) whose external edges are to be implanted by set insertion into this transverse groove (28) and the interior edges projecting into the inside of the enclosure (6) function as support abutment for these associated loading means (14 through 18);

- placing the stack of the flat elements and the associated loading means, in the enclosure (6), against the bottom (7) of the latter;

- putting in place the flat segments functioning as support abutments (29) by set insertion of their exterior edges in the transverse groove (28) of the enclosure (6), and

- re-activating the associated loading means (14 and 15) to act on the stack of flat elements by releasing helical springs (14) by removing the temporary neutralizing springs, and causing these springs to act, which at one of their ends urge the support crown (18) against the support abutments (29) and at their other ends urge with elastic compression permanently the flat elements against each other and against the bottom (7) of the enclosure (6) and thus ensure sealing of the stack thereof, independently of whether the cover of the enclosure (6) is open or closed.

2. A device comprising flat elements such as an electrolyser, characterized in that it comprises a rigid enclosure (6) closed by a bottom (7) and provided with a cover (8), a plurality of electrolytic cells (2) constituted by flat electrodes (9) and diaphragms (12) bordered by flat crowns (13), assembled in an alternating sequence and in a stack on the bottom (7) along guide ties (3), and associated loading means comprising a rigid terminal crown (15) arranged on an insulating plate (4) against the stack of electrolytic cells and sliding on these guide ties (3), a support crown (18) spaced from the latter and locked by support abutments constituted by flat segments (29) mounted in a transverse groove (28) in the internal lateral wall of the enclosure (6) and springs (14) arranged with a regular spacing between these two crowns (15 and 18).

3. The device as claimed in claim 2, characterized in that in the enclosure (6) the transverse groove (28) for the assembly of the support abutments for the associated loading means there is a continuous transverse groove (28) and the support abutments constituted by flat segments (29) arranged in the said continuous transverse groove (28) constitute a continuous row of abutments on the rim of the internal wall of the enclosure (6).

4. The device as claimed in claim 3, characterized in that in the support abutments for the associated loading means the flat segments (29) are four in number.

**Patentansprüche**

1. Verfahren zum dichten Aufeinanderstapeln von flachen Teilen, die durch in einer starren Hülle (6) mit einem Boden (7) und einem Deckel (8) angeordnete Federn zusammengedrückt sind, dadurch gekennzeichnet, daß es folgende Schritte umfaßt:

- die flachen Teile (9-12-13) werden durch wenigstens zwei Führungsstangen (3) gestapelt sowie frei zueinander axial gleitverschiebbar zusammengehalten;

- auf diesem Stapel von flachen Teilen werden zugeordnete Kompressionsmittel montiert, die aus einem starren Endkranz (15), welcher auf dem letzten flachen Teil angeordnet ist und auf den Führungsstangen (3) gleitet, aus einem Träger-Kranz (18) und Federn (14) bestehen, die zwischen diesem Endkranz (15) und diesem Träger-Kranz in gleichmäßigem Abstand angeordnet sind, und diese Federn werden vorübergehend neutralisiert, indem man sie durch Schrauben zur vorübergehenden Neutralisierung (20), die diese beiden Kränze (15, 18) aneinander annähern, zusammengedrückt;

- einerseits wird eine Querrille (28) in der seitlichen Innenwand der Hülle (6) auf einer Höhe des Bodens (7), die um einen vorbestimmten Wert größer als die Höhe des Stapels der flachen Teile ist, und andererseits werden Stützanschläge für diese zugeordneten Kompressionsmittel gebildet, die aus flachen Segmenten (29) bestehen, deren Außenränder dazu bestimmt sind, durch passendes Einfügen in diese Querrille (28) eingesetzt zu werden, und deren in der Wand der Hülle (6) herausragende Innenränder für diese zugeordneten Kompressionsmittel (14-18) als Stützanschläge dienen;

- der Stapel von flachen Teilen und die zugeordneten Kompressionsmittel werden in der Hülle (6) in Anlage gegen den Boden (7) derselben angeordnet;

- die als Stützanschläge dienenden flachen Teile (29) werden durch passendes Einfügen ihrer Außenränder in die Querrille (28) der Hülle (6) eingebracht und

- die zugeordneten Kompressionsmittel (14-15) werden auf dem Stapel von flachen Teilen erneut zur Wirkung gebracht, indem die Schraubenfedern (14) durch Entfernen der Schrauben zur vorübergehenden Neutralisierung freigegeben werden und indem man diese Federn wirken läßt, welche durch eines ihrer Enden den Träger-Kranz (18) gegen die Stützanschläge (29) und mit ihren anderen Enden die flachen Teile elastisch und andauernd gegeneinander und gegen den Boden (7) der Hülle (6) drücken, um so die Dichtheit des Stapelns unabhängig von dem geöffneten bzw. geschlossenen Zustand des Deckels der Hülle (6) zu gewährleisten.

2. Vorrichtung mit flachen Teilen wie eine Elektrolysevorrichtung, dadurch gekennzeichnet, daß sie umfaßt: eine starre Hülle, die durch einen Boden (7) geschlossen ist und einen Deckel (8) aufweist; mehrere Elektrolyse-Zellen (2), die aus flachen Elektroden (9) sowie aus Membranen (12) bestehen, welche durch flache Kränze (13) begrenzt sind, die abwechselnd und gestapelt auf dem Boden (7) entlang der Führungsstangen (3) montiert sind; und zugeordnete Kompressionsmittel mit einem starren Endkranz (15), der auf einer Isolierplatte (4) gegen diesen Stapel von Elektrolyse-Zellen angeordnet ist und auf den Führungsstangen (3) gleiten kann; einen Träger-Kranz (18), der von letzterem beabstandet ist und durch Stützanschläge blockiert ist, welche aus in einer Querrille (28) der seitlichen Innenwand der Hülle (6) angebrachten flachen Segmenten (29) bestehen; und Federn (14), die zwischen diesen beiden Kränzen (15, 18) in gleichmäßigem Abstand angeordnet sind.

3. Vorrichtung nach Anspruch 2, dadurch gekennzeichnet, daß die in der Hülle (6) vorgesehene Querrille (28) zum Montieren der Stützanschläge für die zugeordneten Kompressionsmittel eine durchgehende Querrille (28) ist und die Stützanschläge, die aus in dieser durchgehenden Querrille (28) angeordneten flachen Segmenten (29) bestehen, eine durchgehende Reihe von Anschlägen auf dem Umfang der Innenwand der Hülle (6) bilden.

4. Vorrichtung nach Anspruch 3, dadurch gekennzeichnet, daß in den Stützanschlägen für die zugeordneten Kompressionsmittel vier flache Segmente (29) vorhanden sind.